# DEMANDE DE BREVET EUROPEEN

(11) **EP 1 810 586 A1**
(43) Date de publication de la demande: **25.07.2007**
(21) Numéro de dépôt: 06001153.3
(22) Date de dépôt: 19.01.2006
(51) Int. Cl.: A43D 8/24, A43B 5/04, B44C 1/00

(54) **Procédé de décoration d'une chaussure de sport**

(71) Demandeur: LANGE INTERNATIONAL S.A., 1700 Fribourg (CH)
(72) Inventeur: Perotto, Riccardo, 31040 Venegazzu (IT)
(74) Mandataire: Bugnion Genève

(57) **Abrégé**

Procédé de fabrication d'un élément structurel en matériau plastique rigide avec une décoration comprenant des reliefs pour une chaussure de sport, caractérisé en ce qu'il comprend les étapes suivantes :
-au moins une étape d'injection d'un matériau plastique dans un moule pour former l'élément structurel de chaussure de sport sans au moins une partie de la décoration ;
-compléter ou créer la décoration de l'élément structurel de chaussure de sport sorti du moule d'injection de l'étape précédente par une formation de reliefs décoratifs à l'aide d'une électrode haute fréquence ou d'une sonotrode ultrason, de manière à réaliser une zone possédant des reliefs dans le matériau plastique de l'élément structurel de chaussure de sport.

## Description

L'invention concerne un procédé de décoration par des reliefs superficiels de tout ou partie d'une chaussure de sport à tige rigide, particulièrement adapté aux chaussures pour planche de glisse telle que ski, surf ou chaussure de patinage.

Les chaussures pour sports de glisse nécessitent un bon compromis entre les contraintes de confort et de rigidité. Cette dernière est nécessaire afin de permettre à l'utilisateur de guider de manière précise l'engin de glisse et de ressentir la réponse de l'engin à ses sollicitations. Pour cela, les chaussures se composent en général d'une coque et d'un collier, dont une partie au moins est dans un matériau plastique rigide. Ces pièces ou éléments structurels sont massifs et nécessitent des moules complexes et coûteux. La décoration de telles chaussures est généralement obtenue par leur design d'une part, et par des éléments ajoutés d'autre part. Le design est déterminé une fois pour toutes par le moule de fabrication et la décoration est en général élaborée par des interventions à l'aide d'éléments ajoutés. Par exemple, des impressions, des marquages à chaud sur la surface extérieure de la coque ou du collier sont réalisés. Ces méthodes de décoration restent donc limitées. De plus, les décorations ajoutées sont souvent endommagées par l'environnement abrasif lors de l'utilisation de la chaussure. Dans le cas du ski ou du surf, elles subissent de plus des coups involontaires provoqués par les carres qui provoquent des rayures inesthétiques sur ces décorations. De telles décorations sont donc insuffisantes et peu durables.

D'autres solutions de décoration sont obtenues directement avec un moule de fabrication plus complexe, adapté pour former un design incluant des décorations particulières. Toutefois, une telle méthode est coûteuse car elle repose sur la fabrication d'un moule de forme spécifique. De plus, elle n'est pas flexible car elle ne permet pas de changer la décoration facilement.

Enfin, d'autres décorations indirectes sont obtenues par la décoration des accessoires de ces chaussures, qui sont fabriqués séparément et assemblés aux éléments structurels de la chaussure en fin de procédé de fabrication. Toutefois, cette méthode ne permet pas de décorer n'importe quelle zone de la chaussure dont une surface importante n'est occupée que par ses éléments structurels rigides uniquement.

D'une manière générale, les procédés de décoration des éléments structurels rigides des chaussures de sport de l'art antérieur sont insatisfaisants, ce qui s'explique par la réunion d'un nombre important de contraintes parmi lesquelles :
- la chaussure est destinée à un environnement abrasif et à une utilisation sportive entraînant des efforts importants subis par sa structure. Dans le cas du ski ou du surf, la chaussure est aussi soumise à des coups accidentels provoqués par les carres. Ces agressions extérieures rendent difficiles la disposition de décorations durables sur les éléments structurels de la chaussure ;
- la chaussure a de plus une structure complexe et coûteuse du fait des contraintes mécaniques subies et repose sur des éléments structurels rigides et massifs, qui exigent des outils de fabrication complexes et coûteux. Il n'est pas économiquement envisageable d'augmenter la complexité de la chaussure de manière significative pour une contrainte supplémentaire d'ordre esthétique, s'imposant directement à ses éléments structurels ;
- la chaussure doit aussi avoir un poids minimal pour optimiser son rendement et son coût. Il n'est donc pas envisageable d'ajouter des éléments de décoration sur les éléments structurels de la chaussure qui entraîneraient une augmentation du poids de la chaussure ;
- les éléments structurels de telles chaussures sont dans un matériau plastique rigide, dans lequel il n'est pas facile de réaliser des décorations en relief. En outre, ces éléments présentent une surface complexe, non plane, qui ne facilite pas non plus leur décoration.

Un premier objet de la présente invention consiste à proposer un procédé de fabrication d'éléments structurels rigides d'une chaussure de sport comprenant une décoration en relief.

Un second objet de la présente invention consiste à proposer un procédé de fabrication simple et économique des éléments structurels rigides d'une chaussure de sport avec décoration en relief.

Un troisième objet de la présente invention consiste à proposer un procédé de fabrication des éléments structurels rigides d'une chaussure de sport qui permet d'obtenir plusieurs séries de chaussures avec des décorations différentes de manière économique.

Ainsi, l'invention concerne les chaussures de sport comprenant une structure rigide, c'est à dire comprenant des éléments structurels en matériau plastique d'une dureté supérieure à 40 shD.

D'autre part, l'invention porte sur la décoration directe des éléments structurels d'une chaussure. Nous entendrons par éléments structurels de la chaussure ses éléments essentiels, qui s'étendent sur une surface importante autour du pied et du bas de jambe d'un utilisateur, en remplissant les fonctions techniques pour la pratique du sport. Par exemple, dans le cas d'une chaussure de ski, les éléments structurels de la chaussure sont la coque, le collier et la languette, qui couvrent le pied et le bas de jambe par-dessus le chausson de l'utilisateur et remplissent une double fonction de support du pied et de guidage d'un ski. L'invention ne porte pas sur les petits accessoires ajoutés, assemblés à un des éléments structurels de la chaussure pour apporter une fonction supplémentaire, pour lesquels la décoration est souvent plus simple, ni sur les chaussures basées sur des matériaux souples pour lesquelles le problème technique de décoration se pose différemment.

Selon le concept de l'invention, le procédé de fabrication des éléments structurels d'une chaussure de sport comprend une étape de formation de reliefs décoratifs sur une zone de ces éléments structurels de la chaussure par un procédé à haute fréquence ou ultrasons.

L'invention est plus particulièrement définie par les revendications.

Ces objets, caractéristiques et avantages de la présente invention seront exposés en détail dans la description suivante d'un mode d'exécution particulier fait à titre non-limitatif en relation avec les figures jointes parmi lesquelles :
La figure 1 représente une vue de côté de la partie arrière de la coque rigide d'une chaussure de ski de fond destinée à recevoir le talon après une première étape de fabrication ;
la figure 2 représente une seconde étape de décoration de la coque de chaussure de la figure 1 ;
la figure 3 représente une vue de côté de la partie arrière de la coque rigide d'une chaussure dé ski de fond destinée à recevoir le talon en fin de fabrication ;
la figure 4 représente une variante de réalisation de la coque précédente ; la figure 5 représente une coupe transversale au niveau de la décoration de la coque selon la variante précédente.

Selon un mode d'exécution de l'invention, un élément structurel de chaussure de ski comme la coque ou le collier est fabriqué en matériau plastique rigide par une ou plusieurs étapes d'injection, selon un procédé connu de l'art antérieur, avec un moule ayant une forme simple et habituelle, n'intégrant pas de forme particulière destinée à former une décoration mais se limitant aux formes fonctionnelles. Le même moule est utilisé pour fabriquer une série de chaussures de sport de même pointure.

Quand l'élément structurel de la chaussure est sorti du moule d'injection, le procédé de fabrication comprend en outre une étape spécifique de décoration, qui consiste en la formation de reliefs de décoration sur sa surface à l'aide d'une électrode haute fréquence ou d'une sonotrode ultrasons. Pour cela, l'élément structurel de chaussure est disposé autour d'une enclume de taille correspondante et l'électrode ou la sonotrode est appliquée sur sa surface, de manière à former une décoration en relief en creusant plus ou moins le matériau plastique rigide.

Ainsi, une décoration en relief peut être réalisée sur une surface habituellement lisse de coque ou collier.

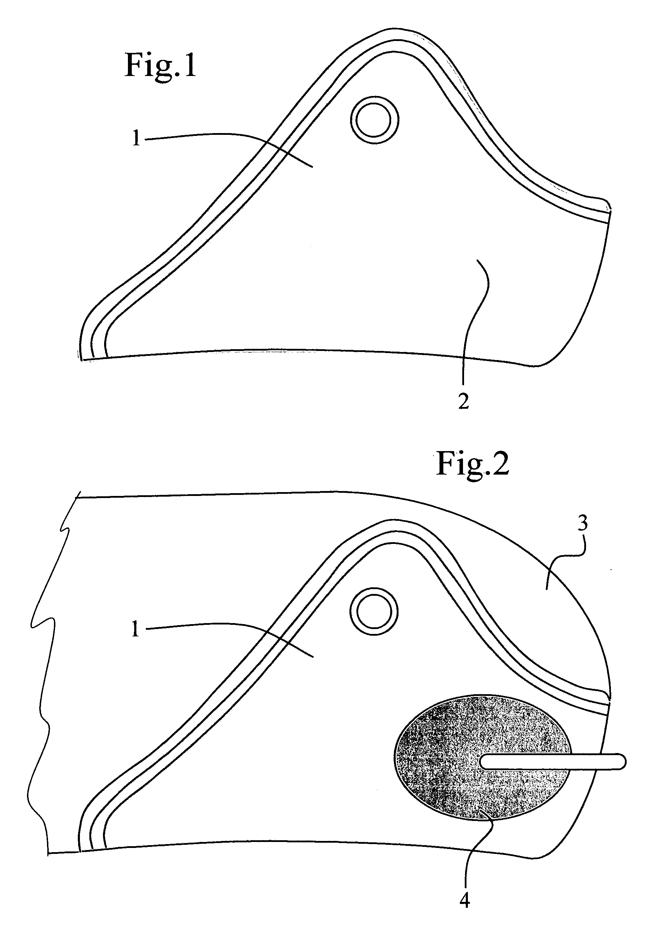

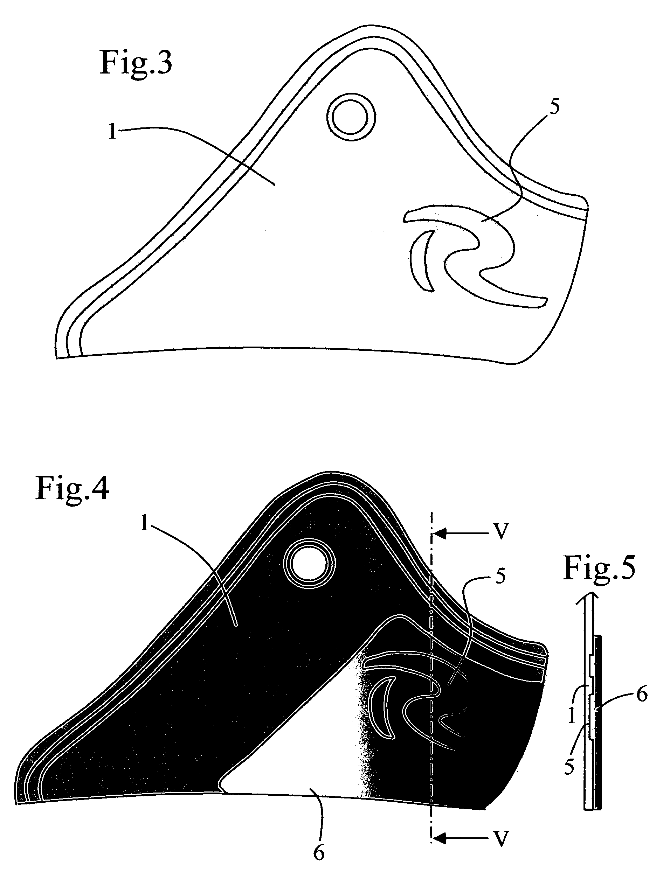

Les figures 1 à 3 illustrent un mode de réalisation de l'invention dans le cadre d'un procédé de fabrication de la partie arrière d'une coque 1 de chaussure de ski de fond, destinée à recevoir le pied, obtenue par une étape d'injection. La figure 1 illustre cette coque 1 sortie du moule d'injection. Elle présente une zone latérale 2 de surface extérieure lisse. La figure 2 représente schématiquement l'étape de décoration de cette coque 1. Pour cela, une enclume 3 est disposée au sein de la coque 1 et une électrode haute fréquence 4 est appliquée au-dessus de la zone 2 de la coque. La figure 3 illustre le résultat obtenu. Une décoration 5 a été réalisée en creux dans la couche plastique de la coque 1 au niveau de la zone 2 de la chaussure.

Les figures 4 et 5 illustrent une variante de réalisation comprenant une étape supplémentaire d'injection d'une couche 6 en un matériau plastique transparent ou translucide sur la zone 2 comprenant la décoration 5 de la coque 1. Cette couche supplémentaire permet la visualisation de la décoration 5 tout en la protégeant.

Selon une autre variante de réalisation non représentée, il est possible d'intercaler un papier de transfert entre l'électrode ou la sonotrode et le matériau plastique à décorer afin d'obtenir dans le même temps une impression couleur dans la zone en relief.

Selon une autre variante de réalisation non représentée, l'élément structurel est composé d'un matériau plastique transparent ou translucide et l'étape de décoration comprend l'application d'une électrode haute fréquence ou d'une sonotrode ultrason sur la face interne du matériau plastique transparent de l'élément structurel.

Les avantages de ce procédé sont les suivants :
- il permet d'obtenir une partie creuse présentant des reliefs à la surface de la chaussure, quelle que soit la forme de la chaussure à décorer, courbée, lisse et/ou présentant des reliefs ;
- il n'altère pas la couleur du matériau plastique traité;
- un relief est obtenu simplement, sans avoir à modifier le moule d'injection de la chaussure. Cela permet de mettre en oeuvre facilement et de manière économique plusieurs décorations différentes pour former plusieurs séries de chaussures sur la base d'éléments structurels issus du même moule d'injection ;
- ce principe peut être exploité par exemple pour différencier à moindre coût l'esthétique des chaussures pour femmes de l'esthétique des chaussures pour hommes, permettant ainsi de reconnaître aisément ces différentes chaussures ;
- comme la décoration est obtenue par un relief présentant des creux, elle est durable dans le temps, va résister aux agressions extérieures ;
- le procédé est rapide, simple et peu coûteux.

## Revendications

1. Procédé de fabrication d'un élément structurel en matériau plastique rigide avec une décoration comprenant des reliefs pour une chaussure de sport, **caractérisé en ce qu'**il comprend les étapes suivantes :
- au moins une étape d'injection d'un matériau plastique dans un moule pour former l'élément structurel de chaussure de sport sans au moins une partie de la décoration ;
- compléter ou créer la décoration de l'élément structurel de chaussure de sport sorti du moule d'injection de l'étape précédente par une formation de reliefs décoratifs à l'aide d'une électrode haute fréquence ou d'une sonotrode ultrason, de manière à réaliser une zone possédant des reliefs dans le matériau plastique de l'élément structurel de chaussure de sport.

2. Procédé de fabrication d'un élément structurel selon la revendication 1, **caractérisé en ce que** la décoration est réalisée sur une zone de l'élément structurel de la chaussure de sport dans un matériau plastique de rigidité supérieure à 40 shD.

3. Procédé de fabrication selon la revendication 1 ou 2, **caractérisé en ce qu'**il consiste en la fabrication d'une coque de chaussure destinée à recouvrir une surface importante du pied d'un utilisateur.

4. Procédé de fabrication selon l'une des revendications précédentes, **caractérisé en ce qu'**il consiste en la fabrication d'un collier de chaussure destiné à recouvrir une surface importante du bas de jambe d'un utilisateur.

5. Procédé de fabrication selon l'une des revendications précédentes, **caractérisé en ce que** l'étape de décoration comprend la disposition de l'élément structurel de chaussure de sport sorti du moule d'injection autour d'une enclume.

6. Procédé de fabrication selon l'une des revendications précédentes, **caractérisé en ce que** l'étape de décoration comprend l'application d'une électrode haute fréquence ou d'une sonotrode ultrason sur la face intérieure ou extérieure de la paroi en matériau plastique de l'élément structurel de chaussure de sport.

7. Procédé de fabrication selon l'une des revendications précédentes, **caractérisé en ce que** l'étape de décoration comprend le positionnement d'une bande de transfert entre l'électrode haute fréquence ou la sonotrode ultrason et le matériau plastique de l'élément structurel de chaussure de sport afin d'obtenir une impression de couleur sur au moins une partie des reliefs décoratifs.

8. Procédé de fabrication selon l'une des revendications précédentes, **caractérisé en ce qu'**il comprend une étape supplémentaire d'injection d'un matériau plastique transparent ou translucide de manière à recouvrir et pénétrer au moins partiellement dans les reliefs décoratifs de l'élément structurel de chaussure de sport.

9. Procédé de fabrication selon l'une des revendications précédentes, **caractérisé en ce qu'**il est appliqué à la fabrication d'un élément structurel d'une chaussure de ski.

10. Procédé de fabrication d'une série d'éléments structurels en matériau plastique rigide avec des décorations différentes comprenant des reliefs pour au moins deux séries de chaussures de sport, **caractérisé en ce qu'**il comprend la première étape suivante commune à toutes les chaussures de sport des au moins deux séries :
- au moins une étape d'injection d'un matériau plastique dans un même moule pour former un même élément structurel de chaussure de sport,
puis **caractérisé en ce qu'**il comprend une étape de décoration des éléments structurels de chaussure de sport sortis du moule d'injection de l'étape précédente par une formation d'au moins deux reliefs décoratifs différents obtenus à l'aide d'électrodes haute fréquence ou sonotrodes ultrason, de manière à obtenir au moins deux séries de chaussures de sport issues du même moule d'injection mais ne comprenant pas toutes la même décoration.
